# EUROPEAN PATENT SPECIFICATION

(11) **EP 1 600 310 B1**
(45) Date of publication and mention of the grant of the patent: **22.08.2007**
(21) Application number: 05008626.3
(22) Date of filing: 20.04.2005
(51) Int. Cl.: B60C 25/132

(54) **Tool protection device in a tyre assembling-disassembling machine**
Werkzeugschutz-Vorrichtung für Reifenmontagemaschine
Dispositif de protection d'outil pour une machine de montage de pneumatique

(30) Priority: 24.05.2004 IT VR20040087
(43) Date of publication of application: 30.11.2005
(73) Proprietor: BUTLER ENGINEERING & MARKETING SPA, 42010 Rio Saliceto (Reggio Emilia) (IT)
(72) Inventor: Gonzaga, Tullio, Correggio (Reggio Emilia) (IT)
(74) Representative: Reniero, Cirillo Silvano

(56) References cited:
- DE-A1- 4 007 006
- US-A- 4 417 614
- US-A- 5 941 294

## Description

The present invention relates to a protection device for a tool in tyre assembling-disassembling machine, particularly, but not exclusively, suitable for tools having a working slot or groove.

As it is known, assembling-disassembling of tyre onto or from a wheel rim is carried out by fixing the wheel rim to a rotatable support of a tyretyre assembling-disassembling machine and by making use of a tool that has a working slot or groove and is secured to the distal end of a suitable tool-carrying arm carried by a frame component of the tyretyre assembling-disassembling machine. The tool is then slidingly inserted between the wheel rim edge and the tyre bead edge. Thus, when the rotatable support is set in rotation, the wheel rim edge slidably engages with the tool working slot or groove, whereas a suitably shaped outer surface of the tool causes the tyre bead edge to be transferred progressively from the inner to the outer side of the wheel rim edge or vice versa depending upon the direction of rotation of the rotatable support.

Tyre assembling-disassembling tools are made either of a relatively hard metal alloy material or of a relatively soft synthetic material, preferably polyamide, e.g. Nylon®, either alone or reinforced with fibers, e, g. glass fibers, carbon fibers, or the like, in order to ensure a higher flexural-torsional stiffness to better withstand dynamic stress generated, in use, on the one hand, by forced sliding of the tyre edge onto the tool outer surface and, on the other, owing to the tyre peripheral edge sliding within the tool working slot or groove. Clearly, as the tyre edge slides onto the tool outer surface, a resultant of forces is generated which is radially directed with respect to wheel rim, and causes a substantial rise in pressure and thus in friction between surface of the tool working groove or slot and peripheral edge of the wheel rim C set in rotation by the rotatable support of the tyre assembling-disassembling machine.

Depending upon the type of wheel rim, i.e. made either of painted light alloy or of steel, friction between the peripheral edge of the wheel rim and the working slot or groove of the tool causes either wear of the tool or scratching of the wheel rim, As a matter of fact, should the wheel rim be made of painted light alloy, sliding of the relatively hard body of the tool onto a portion of the outer peripheral surface of the wheel rim can result in scratching or even damaging the wheel rim, whereas in the case of a steel wheel rim, unless the employed tool is highly resistant it can be rapidly worn off and thus permanently damaged. Should the tool employed in a tyre assembling-disassembling operation be new, sliding of the working slot or groove onto the outer peripheral edge of the wheel rim of light alloy does not normally cause any damage; on the contrary, in the case in which the tool was previously used many times onto old and usually deformed steel wheel rim, its groove or slot surface could be deeply scratched which result in the formation of portions in relief, possible debris and/or dust that will scratch the paint on the wheel rim made of light alloy in future maintenance operations. For this reason, the choice of the tool material is normally the result of a compromise of a number of various requirements none of which is fully fulfilled.

In order to overcome these drawbacks, as it is known, it has already been proposed to provide the tyre assembling-disassembling machines with two interchangeable tools, one made of plastic material suitable for light alloy wheel rims and the other made of metal alloy suitable for steel wheel rims. Nevertheless, although versatility of the tyre assembling-disassembling machines is increased, the operator still has to face the inconvenience of selecting a suitable tool each time.

The main object of the present invention is to provide a protection device for a tool in a tyre assembling-disassembling machine, which can be quickly and easy applied and removed.

Another object of the present invention is to provide a protection device of universal use, i.e. suitable for being applied to any type of wheel rim, i.e, designed to protect both the tool, whose useful life is thus extended, and wheel rim in tyre assembling-disassembling operations.

A further object of the present invention is to provide a protection device that can be manufactured at low production costs.

These and other object that will better appear below are achieved by a protection device according the present invention for a tool in a tyre assembling-disassembling machine, which tool has at least one working slot or groove designed to slidingly engage, in use, with a peripheral edge of a wheel rim located on said tyre assembling-disassembling machine, characterized in that it comprises a laminar body member designed to be seated into and coat at least one portion of said working groove, and retaining means between said laminar body member and said tool arranged to removably keeping in position said laminar body member in said working groove.

Further features and advantages of a protection device in a tyre assembling-disassembling machine tool according to the present invention will better appear from the following detailed description of some presently preferred embodiments thereof, given by way of non-limiting examples of how to carry out the invention, with reference to the accompanying drawings, in which:

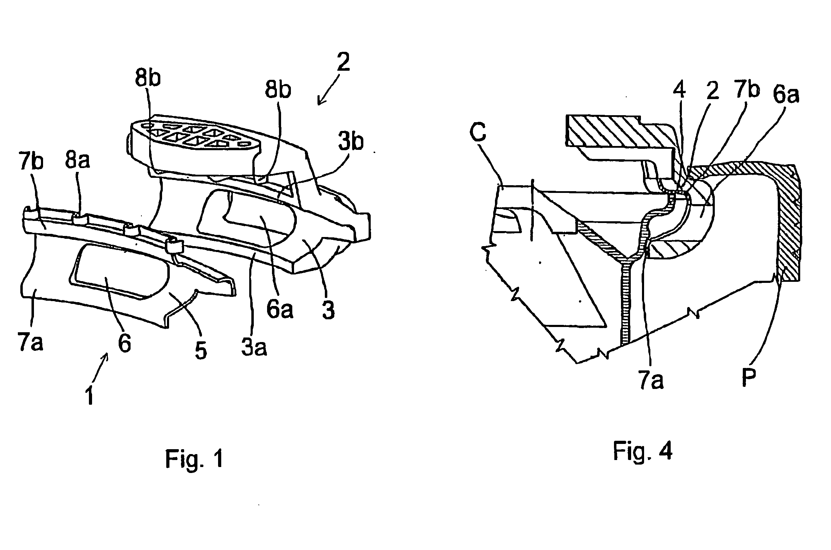

Figure 1 illustrates an exploded perspective view of a tool provided with a protection device according to the present invention for a tyre assembling-disassembling machine;

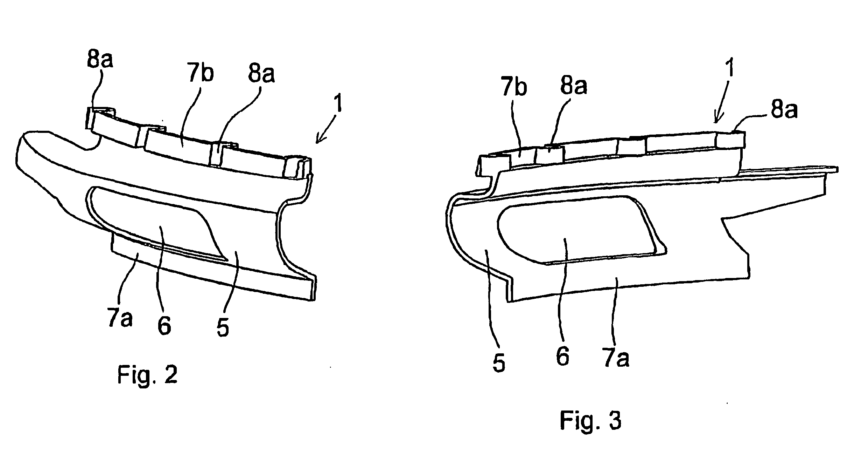

Figure 2 shows a rear perspective view of the protection device in Fig. 1 according to the present invention;
Figure 3 is a rear perspective view of the protection device in Fig. 2; and
Figure 4 shows a partial cross-section view of a tool provided with a tool protection device according to the present invention engaging with a wheel rim of a tyred wheel.

In the accompanying drawings the same or similar parts or components are indicated with the same reference numerals.

With reference to the above Figures, it will be noted that a protection device according to the present invention for a tool 2 of a tyre assembling-disassembling machine is obtained from a laminar body 1 of a suitable material, preferably pre-shaped or formed to match a working slot or groove 3 in the tool 2. In use, the slot 3 is designed to engage with a peripheral edge 4 of a wheel rim C of a tyre P.

More precisely, the protection device is obtained from a pre-shaped laminar body 1 having a central convex zone or band 5 designed to cover or coat, in use, the surface of the working slot or groove 3 of the tool 2 to protect both the working groove 3 and the peripheral edge 4 of the wheel rim C from any damages being caused during sliding of the peripheral edge 4 into the working groove 3. Roughly at the center line of the convex zone 5 a through opening 6 is formed which, in use, is designed to be positioned at a respective through port 6a obtained in the tool 2, thereby providing a blank area both in the working groove 3 and in the laminar body 1 to reduce the contact surface, that, in use, will be in sliding engagement with the edge 4 of the wheel rim C.

Above and undemeath the convex zone or band 5, the laminar body 1 has curved peripheral zones or bands 7a and 7b, respectively, which extend throughout the same radius of curvature, which is substantially similar to that of the working groove 3, and are designed to overlap, in use, respective edges 3b and 3a of the working groove or slot 3.

At the upper peripheral band 7b or on both the peripheral bands 7b and 7a of the protection device, a sequence of relieves or recesses 8a are formed, which are suitable for engaging with a respective recess or relief 8b provided at the respective edge or edges 3b, 3a of the working groove 3, thereby providing, in use, a male-female or shape-matching engagement suitable for providing a solid retaining means for the laminar body 1 against entrainment forces generated owing to the rotation of the wheel rim C with respect to the tool 2.

Mounting of the protection device into tool 2 in the tyre assembling-disassembling machine is made by simple abutment or resilient deformation of laminar body material. In practice, once the concave zone or band 5 of the protection device has been loaded onto the working groove or slot 3 of the tool 2, the operator exerts a slight pressure onto the lower and upper bands 7a and 7b in order to push them forward towards respective edges of the working slot 3, whereby forcing the concave band 5 to match, likewise a protection coating, the surface of the working slot 3. In this manner, the laminar body 1 remains removably engaged and held in position in the tool 2.

Advantageously, the laminar body 1 can be made of a relatively soft plastic material, preferably to be used with alloy wheel rims, or of a metal material or metal alloy for use with steel wheel rims, With metal alloy wheel rims, the laminar body 1 will be selected from the group comprising: polyethylene, polypropylene, PVC, polyamide, polythene, or the like having a Shore hardness from 85 to 97, preferably from 92 to 95, whereas with steel wheel rims the laminar body 1 will preferably be made of stainless steel X5CRNi18/10 UNI EN188/2 or AISI 308,310, having a Rockwell hardness from 28 to 32 HRC.

More particularly, the material which the protection device is made of will vary depending upon the features of the material of the wheel rim C against which tool 2 is designed to act. Thus, should the wheel rim C be made of painted light alloy, laminar bodies 1 will be used made of a soft material such as a soft plastic material, which does not produce scratches or engravings in the edge 4 of the wheel rim C, upon slidingly engaging with the working groove or slot 3, whereas for steel wheel rims hard materials, such as steel, will be used. Obviously, a laminar body of plastic material will have a service life much shorter than that of a steel laminar body, which then will be used for several tyred wheels.

The above described protection device is susceptible to numerous modifications and variations within the scope as defined by the claims.

Thus, for example, a not-shaped laminar body 1 can also be employed. In this case, retaining means will be provided, e.g. comprising a suitable number of through openings or slots in the laminar body 1 and a corresponding number of hooking or engaging members for engagement with the openings or slots in the tool 2. The laminar body 1 will completely match the shape of the working groove or slot 3 when tool 2 is brought to abut against the edge of the wheel rim C and is used for the first time in an assembling or disassembling operation of a tyre P.

## Claims

1. A protection device for a tool (2) in a tyre assembling-disassembling machine, said tool (2) having at least one working slot or groove (3) designed to slidingly engage, in use, with a peripheral edge of a wheel rim (C) located on said tyre assembling-disassembling machine, **characterized in that** it comprises a laminar body member (1) designed to be seated into and coat al least one portion of said working groove (3), and retaining means (8a, 8b) between said laminar body member (1) and said tool (2) arranged to removably keeping in position said laminar body member (1) in said working groove (3),

2. A device as claimed in claim 1, **characterized in that** said laminar body (1) comprises at least one through light (6) designed to be located at a respective recess (6a) in said working groove (3),

3. A device as claimed in claim 1 or 2, **characterized in that** said laminar body (1) comprises a relatively soft plastic material with Shore hardness from 85 to 97.

4. A device as claimed in claim 3, **characterized in that** said plastic material is selected from the group comprising: polypropylene, polyethylene, PVC, polyamide, polythene, and the like.

5. A device as claimed in claim 1 or 2, **characterized in that** said laminar body comprises a relatively hard metal material having a Rockwell hardness from 28 to 32 HRC.

6. A device as claimed in claim 5, **characterized in that** said metal material comprises steel.

7. A protection device as claimed in any previous claim, **characterized in that** said retaining means (8a, 8b) comprises at least one shape-matching between laminar body (1) and said tool (2).

8. A protection device as claimed in claim 7, **characterized in that** said retaining means (8a, 8b) comprises a plurality of relieves or recesses (8a) in said laminar body (1) and recesses or relieves (8b), respectively, in said tool (2).

9. A protection device as claimed in claim 7, **characterized in that** said retaining means comprises a plurality of openings in said laminar body (1) and a respective engaging member on said tool (2).

## Patentansprüche

1. Schutzeinrichtung für ein Werkzeug (2) in einer Reifenmontagemaschine, wobei das Werkzeug (2) mindestens einen Arbeitsschlitz oder eine Arbeitsnut (3) aufweist, der oder die dafür ausgelegt ist, bei Gebrauch gleitend einen peripheren Rand einer Radfelge (C) in Eingriff zu nehmen, die sich an der Reifenmontagemaschine befindet, **dadurch gekennzeichnet, daß** sie ein geschichtetes Körperglied (1) umfasst, das dafür ausgelegt ist, in mindestens einen Abschnitt der Arbeitsnut (3) eingesetzt zu werden und dies zu beschichten, und Haltemittel (8a, 8b) zwischen dem geschichteten Körperglied (1) und dem Werkzeug (2), dafür ausgelegt, das geschichtete Körperglied (1) entfernbar in der Arbeitsnut (3) in Position zu halten.

2. Einrichtung nach Anspruch 1, **dadurch gekennzeichnet, dass** der geschichtete Körper (1) mindestens eine Durchgangsöffnung (6) umfasst, die dafür ausgelegt ist, sich bei einer jeweiligen Vertiefung (6a) in der Arbeitsnut (3) zu befinden.

3. Einrichtung nach Anspruch 1 oder 2, **dadurch gekennzeichnet, daß** der geschichtete Körper (1) ein relativ weiches Kunststoffmaterial mit einer Shore-Härte von 85 bis 97 aufweist.

4. Einrichtung nach Anspruch 3, **dadurch gekennzeichnet, dass** das Kunststoffmaterial ausgewählt ist aus der Gruppe umfassend: Polypropylen, Polyethylen, PVC, Polyamid und dergleichen.

5. Einrichtung nach Anspruch 1 oder 2, **dadurch gekennzeichnet, dass** der geschichtete Körper ein relativ hartes Metallmaterial umfasst mit einer Rockwell-Härte von 28 bis 32 HRC.

6. Einrichtung nach Anspruch 5, **dadurch gekennzeichnet, dass** das Metallmaterial Stahl umfasst.

7. Schutzeinrichtung nach einem der vorhergehenden Ansprüche, **dadurch gekennzeichnet, dass** das Haltemittel (8a, 8b) mindestens ein Formanpassung zwischen dem geschichteten Körper (1) und dem Werkzeug (2) umfasst.

8. Schutzeinrichtung nach Anspruch 7, **dadurch gekennzeichnet, daß** das Haltemittel (8a, 8b) mehrere Reliefs oder Vertiefungen (8a) in dem geschichteten Körper (1) bzw. Vertiefungen oder Reliefs (8b) in dem Werkzeug (2) umfasst.

9. Schutzeinrichtung nach Anspruch 7, **dadurch gekennzeichnet, dass** das Haltemittel (8a, 8b) mehrere Öffnungen in dem geschichteten Körper (1) und ein entsprechendes Eingriffsglied an dem Werkzeug (2) umfasst.

## Revendications

1. Un dispositif de protection pour un outil (2) dans une machine de montage et de démontage de bandages pneumatiques, ledit outil (2) ayant au moins une rainure ou encoche de fonctionnement (3) conçue pour venir en contact de manière coulissante, en utilisation, avec un bord périphérique d'une jante de roue (C) située sur ladite machine de montage et de démontage de bandages pneumatiques, **caractérisé en ce qu'**il comprend un organe (1) à corps lamellaire conçu pour être calé dans et recouvrir au moins une portion de ladite rainure de fonctionnement (3), et des moyens de retenue(8a, 8b) entre ledit organe (1) de corps lamellaire et ledit outil (2) agencés pour maintenir en position de manière amovible ledit organe (1) à corps lamellaire (1) dans ladite rainure de fonctionnement (3).

2. Un dispositif selon la revendication 1, **caractérisé en ce que** ledit corps lamellaire (1) comprend au moins un regard traversant (6) conçu pour être situé en face d'une cavité respective (6a) dans ladite rainure de fonctionnement (3).

3. Un dispositif selon la revendication 1 ou 2, **caractérisé en ce que** ledit corps lamellaire (1) comprend un matériau en matière plastique relativement souple avec une dureté Shore de 85 à 97.

4. Un dispositif selon la revendication 3, **caractérisé en ce que** ledit matériau en matière plastique est sélectionné dans le groupe comprenant: polypropylène, polyéthylène, PVC, polyamide, polythène, et similaires.

5. Un dispositif selon la revendication 1 ou 2, **caractérisé en ce que** ledit corps lamellaire comprend un matériau en métal relativement dur ayant une dureté Rockwell de 28 à 32 HRC.

6. Un dispositif selon la revendication 5, **caractérisé en ce que** ledit matériau en métal comprend de l'acier.

7. Un dispositif de protection selon l'une quelconque des revendications précédentes, **caractérisé en ce que** lesdits moyens de retenue (8a, 8b) comprennent au moins une correspondance de forme entre le corps lamellaire (1) et ledit outil (2).

8. Un dispositif de protection selon la revendication 7, **caractérisé en ce que** lesdits moyens de retenue (8a, 8b) comprennent une pluralité de reliefs ou de cavités (8a) dans ledit corps lamellaire (1) et respectivement des cavités ou des reliefs (8b) dans ledit outil (2).

9. Un dispositif de protection selon la revendication 7, **caractérisé en ce que** lesdits moyens de retenue comprennent une pluralité d'ouvertures dans ledit corps lamellaire (1) et un organe respectif de mise en contact sur ledit outil (2).
